# EUROPEAN PATENT APPLICATION

(11) **EP 4 644 733 A1**
(43) Date of publication of application: **05.11.2025**
(21) Application number: 23911700.5
(22) Date of filing: 12.12.2023
(51) Int. Cl.: F16J 15/34, F16C 17/04

(54) **SLIDING COMPONENTS**

(30) Priority: 28.12.2022 JP 2022211753
(71) Applicant: Eagle Industry Co., Ltd., Minato-ku Tokyo 105-8587 (JP)
(72) Inventor: YAMAGUCHI Gai, Tokyo 105-8587 (JP); UCHIYAMA Ryosuke, Tokyo 105-8587 (JP); TSUKAMOTO Takahiro, Tokyo 105-8587 (JP); NEGISHI Yuta, Tokyo 105-8587 (JP)
(74) Representative: WSL Patentanwälte Partnerschaft mbB
(86) International application number: PCT/JP2023/044481
(87) International publication number: WO 2024/142919

(57) **Abstract**

A sliding component capable of exerting a sufficient foreign matter discharge effect both when the sliding component is rotating at high speed and low speed is provided. At least one sliding surface 11 is provided with a first dynamic pressure generation groove 13 which communicates with a leakage side space and a second dynamic pressure generation groove 14 of which a terminating end position on a sealed fluid side is located on the sealed fluid side in relation to a terminating end position of the first dynamic pressure generation groove 13 on the sealed fluid side, the second dynamic pressure generation groove 14 has an extension portion 14c that protrudes toward the sealed fluid side in relation to the terminating end portion of the first dynamic pressure generation groove 13, a land 19 is formed between the extension portions 14c of the second dynamic pressure generation grooves 14 adjacent to each other in the circumferential direction, and a dynamic pressure generating region 15 which is constituted by a plurality of minute recesses 16 not communicating with a sealed fluid side space S2 and a leakage side space S1 is formed on the sealed fluid side in relation to the terminating ends 14b of the second dynamic pressure generation grooves 14 adjacent to each other in the circumferential direction.

## Description

### {TECHNICAL FIELD}

The present invention relates to a sliding component, for example, a sliding component including a pair of sliding rings that rotate relative to each other and are used for, for example, a shaft sealing device sealing a rotating shaft of a rotating machine in an automotive seal field, a general industrial machinery seal field, or another seal field or a bearing of a machine in an automotive bearing field, a general industrial machinery bearing field, or another bearing field.

### {BACKGROUND ART}

As a shaft sealing device for preventing leakage of a sealed fluid, for example, a mechanical seal is provided with a pair of annular sliding components that rotate relative to each other and have sliding surfaces that slide against each other. In such a mechanical seal, in recent years, there has been a demand for the purpose of environmental measures and the like to reduce the energy lost due to sliding.

For example, a sliding component illustrated in Patent Citation 1 is a mechanical seal in which a sealed liquid exists on the outer diameter side and a gas exists on the inner diameter side, and a sliding surface of one sliding component is provided with a spiral dynamic pressure generation groove communicating with the gas side and having one end closed on the sliding surface. When the sliding components rotate relative to each other, a gas is drawn into the dynamic pressure generation groove, and a dynamic pressure generated at a terminating end of the dynamic pressure generation groove separates the sliding surfaces to form an air film therebetween and achieve low friction.

Further, the dynamic pressure generation groove which generates a dynamic pressure using a gas with such a spiral shape also has a function of discharging foreign matter from the dynamic pressure generation groove to the outside of the sliding surface by the gas sucked from one radial end side during high-speed rotation. Since the plurality of dynamic pressure generation grooves of Patent Citation 1 all have the same radial length, there is a technical problem in that foreign matter accumulates near terminating ends of the dynamic pressure generation grooves and cannot be completely discharged to the outside of the sliding surface.

Therefore, there is known as a sliding component in which some of dynamic pressure generation grooves are formed long in the radial direction to provide a change in radial pressure gradient (for example, see Patent Citation 2). Accordingly, foreign matter is less likely to accumulate near the terminating ends of the dynamic pressure generation grooves, and the foreign matter discharge effect during high-speed rotation can be improved.

### {CITATION LIST}

### {Patent Literature}

Patent Citation 1: JP S62-31775 A (page 2, FIG. 2)
Patent Citation 2: WO 2018/139232 A (page 8, FIG. 3)

### {SUMMARY OF INVENTION}

### {Technical Problem}

However, the dynamic pressure generation groove can achieve a sufficient foreign matter discharge effect by sufficiently increasing the pressure on the terminating end side due to shear with the facing sliding surface during high-speed rotation, but there is a problem in that the pressure on the terminating end side is low during low-speed rotation and a sufficient foreign matter discharge effect is less likely to be exerted.

The present invention has been made in view of such problems and an object thereof is to provide a sliding component capable of exerting a sufficient foreign matter discharge effect both when the sliding component is rotating at high speed and low speed.

### {Solution to Problem}

In order to solve the foregoing problem, a sliding component according to the present invention is a sliding component including a pair of sliding rings having sliding surfaces which rotate relative to each other to partition a sealed fluid side space and a leakage side space, wherein at least one of the sliding surfaces is provided with first dynamic pressure generation grooves each of which communicates with the leakage side space and second dynamic pressure generation grooves each of which has a terminating end position on a sealed fluid side, the terminating end portion being located on the sealed fluid side in relation to a terminating end position of the first dynamic pressure generation groove on the sealed fluid side, wherein each of the second dynamic pressure generation grooves has an extension portion that protrudes toward the sealed fluid side in relation to the terminating end portion of the first dynamic pressure generation groove, and wherein a first dynamic pressure generating region which is constituted by a plurality of minute recesses not communicating with the sealed fluid side space and the leakage side space is formed on the sealed fluid side between the extension portions of the second dynamic pressure generation grooves adjacent to each other in a circumferential direction. According to the aforesaid feature of the present invention, since the minute recess formed on the sealed fluid side space in relation to the first dynamic pressure generation groove and the second dynamic pressure generation groove generates a dynamic pressure in the dynamic pressure generating region, the formation of the fluid film can be maintained and supplemented from the beginning of low-speed rotation and the interface between the leakage side fluid and the sealed fluid is pushed out toward the sealed fluid side. In addition, since the minute recess is present on the sealed fluid side in relation to the second dynamic pressure generation groove, the land present between the circumferential portions protruding toward the sealed fluid side in the second dynamic pressure generation grooves can improve the dynamic pressure effect of the first dynamic pressure generation groove, and the minute recess can supplement the dynamic pressure effect of the second dynamic pressure generation groove, it is possible to improve the discharge performance for liquid, foreign matter, and the like even during low-speed rotation.

It may be preferable that each of the minute recesses has a circumferential width and a radial width, and narrower one of the circumferential width and the radial width is narrower than circumferential widths of the first dynamic pressure generation groove and the second dynamic pressure generation groove. According to this preferable configuration, since the width of the minute recess is narrower than the width of any one of the first dynamic pressure generation groove and the second dynamic pressure generation groove and a land is secured on the sealed fluid side in relation to the terminating ends of the first dynamic pressure generation groove and the second dynamic pressure generation groove, it is possible to obtain the dynamic pressure generation effect due to the minute recess during low-speed rotation while preventing the leakage of the sealed fluid.

It may be preferable that at least a part of the minute recesses is formed to lengthen in a relative rotation direction of the sliding surfaces. According to this preferable configuration, since the minute recess does not have the large radial component, the sealing performance in a stop state can be improved, and since the minute recess acts as resistance against the fluid flowing out from the first dynamic pressure generation groove toward the sealed fluid side, a dynamic pressure is generated and hence the dynamic pressure generation effect during low-speed rotation can be effectively assisted.

It may be preferable that at least a part of the minute recesses has a circumferential component and a radial component larger than the circumferential component. Instead, it may be preferable that at least a part of the minute recesses is formed so as to lengthen in a radial direction or in an inclination direction which is inclined with respect to the radial direction. According to this preferable configuration, since a flow of the radial component is generated in the minute recess, the foreign matter discharge performance can be further improved.

It may be preferable that the minute recess closest to the sealed fluid side in the dynamic pressure generating region has an annular shape. According to this preferable configuration, the leakage of the sealed fluid into the leakage side space can be prevented.

It may be preferable that the minute recesses constituting the dynamic pressure generating region are equal, in groove pattern, to each other. According to this preferable configuration, since the direction of the flow of the fluid guided by the minute recesses becomes constant, the dynamic pressure generation effect is stabilized by suppressing turbulence.

It may be preferable that the sealed fluid is gas or liquid, or may be a mist mixture of liquid and gas.

### {BRIEF DESCRIPTION OF DRAWINGS}

FIG. 1 is a longitudinal cross-sectional view illustrating an example of a mechanical seal according to a first embodiment of the present invention.
FIG. 2 is a view in which a sliding surface of a stationary seal ring in the first embodiment is viewed from the axial direction.
FIG. 3 is an enlarged view in which the sliding surface of the stationary seal ring in the first embodiment is viewed from the axial direction.
FIG. 4 is an explanatory diagram in which the movement of a fluid in first and second dynamic pressure generation grooves and minute recesses during high-speed rotation for the sliding surface of the stationary seal ring in the first embodiment is viewed from the axial direction.
FIG. 5 is an explanatory diagram in which the movement of a fluid in the first and second dynamic pressure generation grooves and minute recesses during low-speed rotation for the sliding surface of the stationary seal ring in the first embodiment is viewed from the axial direction.
FIG. 6 is an enlarged view in which a sliding surface of a stationary seal ring included in a sliding component according to a second embodiment of the present invention is viewed from the axial direction.
FIG. 7 is an enlarged view in which a sliding surface of a stationary seal ring included in a sliding component according to a third embodiment of the present invention is viewed from the axial direction.
FIG. 8 is an enlarged view in which a sliding surface of a stationary seal ring included in a sliding component according to a fourth embodiment of the present invention is viewed from the axial direction.
FIG. 9 is an enlarged view in which a sliding surface of a stationary seal ring included in a sliding component according to a fifth embodiment of the present invention is viewed from the axial direction.
FIG. 10 is an enlarged view in which a sliding surface of a stationary seal ring included in a sliding component according to a sixth embodiment of the present invention is viewed from the axial direction.
FIG. 11 is a view in which a sliding surface of a stationary seal ring of a modified example of an outside type is viewed from the axial direction.

### {DESCRIPTION OF EMBODIMENTS}

Modes for carrying out a sliding component according to the present invention will be described on the basis of the embodiments.

### {First embodiment}

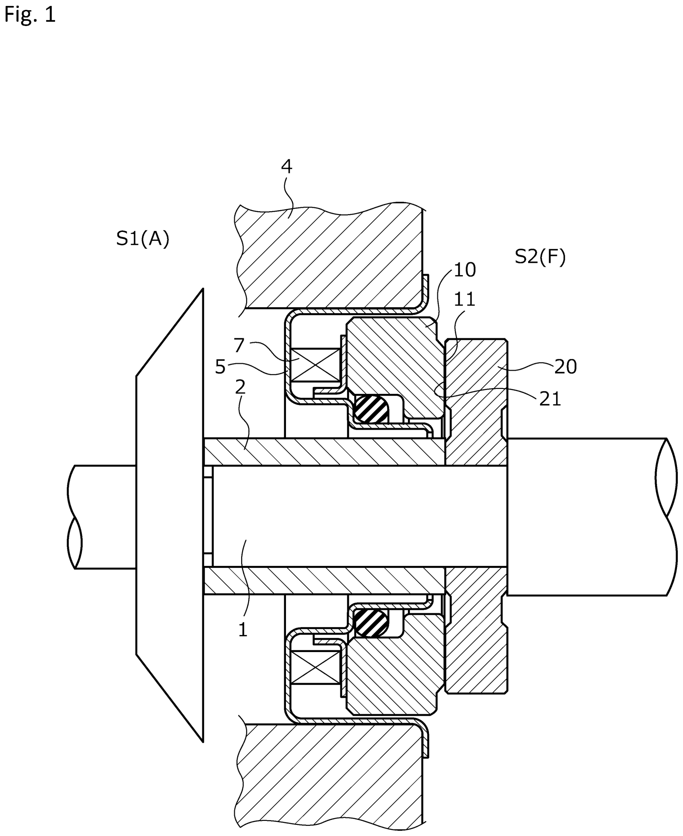

A sliding component according to a first embodiment of the present invention will be described with reference to FIGS. 1 to 5. Furthermore, in this embodiment, an example in which a sliding component is a mechanical seal will be described. Further, the inner space of the mechanical seal is a space S1 in which atmosphere A exists (hereinafter, simply referred to as a "leakage side space"). Further, the outer space of the mechanical seal is a space S2 in which a sealed fluid F exists (hereinafter, simply referred to as a "sealed fluid side space"). Further, the outer diameter side of the sliding component constituting the mechanical seal is referred to as the sealed fluid side (high pressure side), and the inner diameter side thereof is referred to as the leakage side (low pressure side).

The mechanical seal for automobiles illustrated in FIG. 1 is an inside type that seals the sealed fluid F that is leaking from the outer diameter side to the inner diameter side of the sliding surface, and the leakage side space S1 is connected to the atmosphere A. Furthermore, in this embodiment, an example is illustrated in which the sealed fluid F is a high-pressure liquid and the atmosphere A is a gas with a lower pressure than the sealed fluid F. Further, the sealed fluid F is not limited to a liquid, but may be a gas or a mist mixture of liquid and gas. The fluid of the leakage side space S1 is not limited to gas, but may be liquid or a mist mixture of liquid and gas.

The mechanical seal mainly includes a rotating seal ring 20 which is the other annular sliding component and a stationary seal ring 10 which is an annular sliding component. The rotating seal ring 20 is provided on a rotary shaft 1 via a sleeve 2 to be rotatable together with the rotary shaft 1. The stationary seal ring 10 is provided on a seal cover 5 fixed to a housing 4 of an attached device to be non-rotatable and movable in the axial direction. The stationary seal ring 10 is biased in the axial direction by an elastic member 7. Accordingly, a sliding surface 11 of the stationary seal ring 10 and a sliding surface 21 of the rotating seal ring 20 are adapted to slide closely against each other. Furthermore, the sliding surface 21 of the rotating seal ring 20 is flat, and this flat surface does not have any recesses such as grooves.

The stationary seal ring 10 and the rotating seal ring 20 are typically made of SiC (as an example of hard material) or a combination of SiC and carbon (as an example of soft material). However, any sliding material can be applied insofar as it is used as a sliding material for a mechanical seal. The SiC includes a sintered body using boron, aluminum, carbon, or the like as a sintering aid and a material made of two or more types of phases having different components and compositions, examples of which include SiC in which graphite particles are dispersed, reaction-sintered SiC made of SiC and Si, SiC-TiC, and SiC-TiN. As the carbon, resin-molded carbon, sintered carbon, and the like can be used, including carbon in which carbon and graphite are mixed. In addition to the above sliding materials, a metal material, a resin material, a surface modification material (e.g., coating material), a composite material, and the like can also be applied.

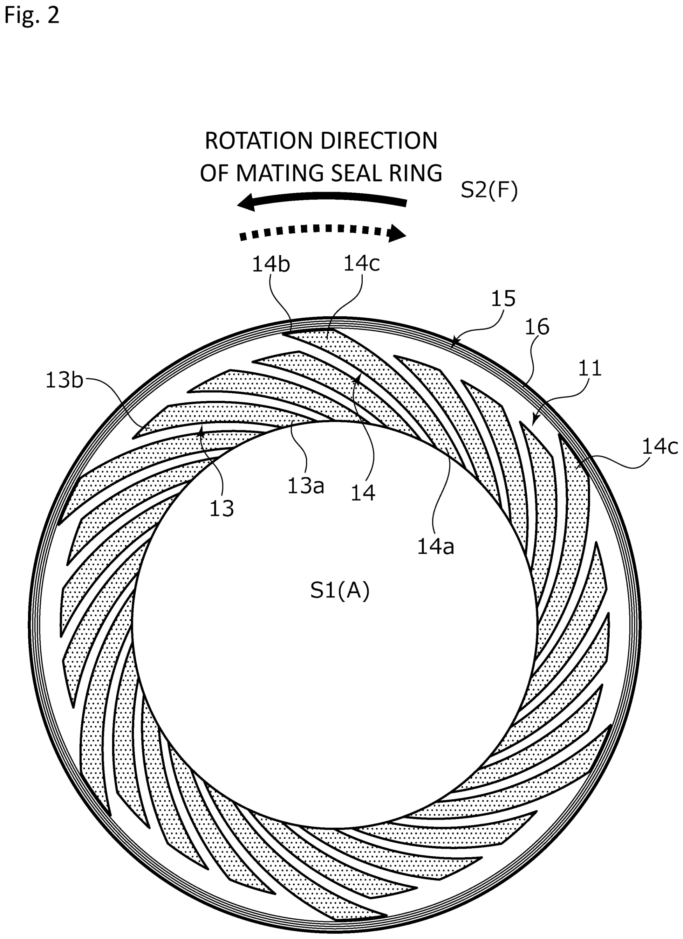

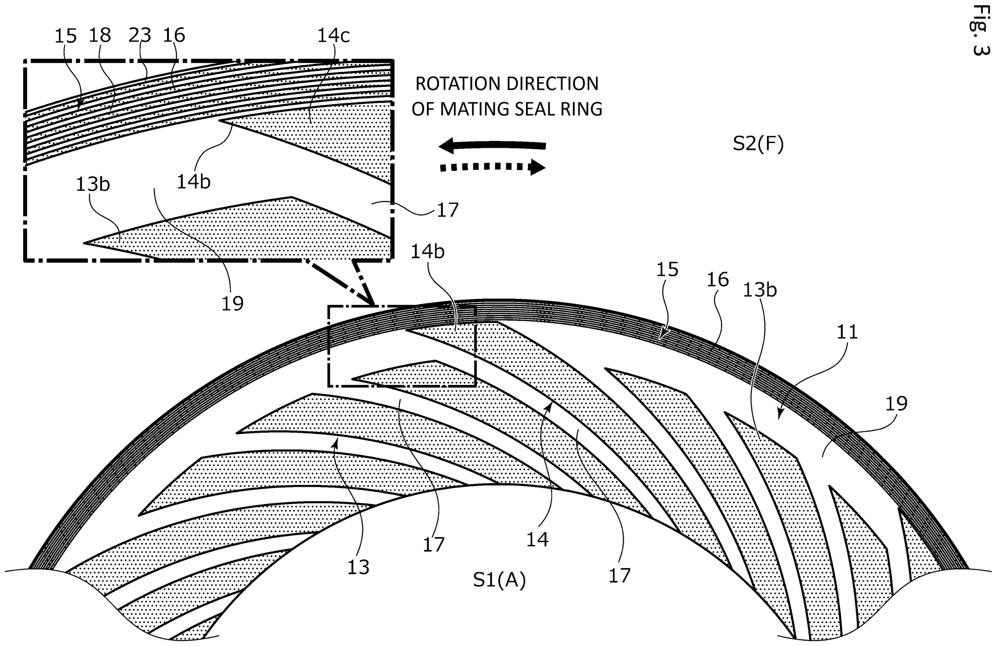

As illustrated in FIGS. 2 and 3, the rotating seal ring 20 which is a mating seal ring slides relative to the stationary seal ring 10 in a counterclockwise direction as indicated by the solid arrow or in a clockwise direction as indicated by the dotted arrow. Hereinafter, a description will be made on the assumption that the rotation direction indicated by the solid arrow is the forward rotation direction and the rotation direction indicated by the dotted arrow is the reverse rotation direction.

A plurality of first and second dynamic pressure generation grooves 13 and 14 of different lengths with terminating ends 13b and 14b at different radial positions are formed on the sliding surface 11 of the stationary seal ring 10. In the first dynamic pressure generation groove 13 having a relatively short radial length, a starting end 13a communicates with the leakage side space S1 and a terminating end 13b does not communicate with the sealed fluid side space S2. In the second dynamic pressure generation groove 14 having a relatively long radial length, a starting end 14a communicates with the leakage side space S1 and a terminating end 14b does not communicate with the sealed fluid side space S2.

The second dynamic pressure generation grooves 14 are arranged at equal intervals in the circumferential direction of the sliding surface 11. The first dynamic pressure generation grooves 13 are arranged in a plurality of positions at equal intervals in the circumferential direction between the adjacent second dynamic pressure generation grooves 14. In this embodiment, six second dynamic pressure generation grooves 14 are arranged in the circumferential direction of the sliding surface 11. Three first dynamic pressure generation grooves 13 are arranged between each pair of second dynamic pressure generation grooves 14.

Adjacent first dynamic pressure generation grooves 13 are separated from each other at equal distances in the circumferential direction. Further, the distance between the first dynamic pressure generation groove 13 and the adjacent second dynamic pressure generation groove 14 is the same as the distance between the first dynamic pressure generation grooves 13. In other words, the adjacent first dynamic pressure generation grooves 13 and second dynamic pressure generation grooves 14 are all equally separated in the circumferential direction. Furthermore, the present invention is not limited thereto, and the adjacent first dynamic pressure generation groove 13 and second dynamic pressure generation groove 14 may be separated by a distance different from the circumferential distance between the first dynamic pressure generation grooves 13.

The starting end 13a of the first dynamic pressure generation groove 13 communicates with the leakage side space S1. The first dynamic pressure generation groove 13 is a spiral groove that extends in an arc shape inclined from the starting end 13a toward the outer diameter side in the forward rotation direction of the rotating seal ring 20 (the forward rotation direction of relative rotation), and generates a dynamic pressure at the terminating end 13b when the rotating seal ring 20 rotates forward. Similarly, the starting end 14a of the second dynamic pressure generation groove 14 communicates with the leakage side space S1. The second dynamic pressure generation groove 14 is a spiral groove that extends in an arc shape with the same curvature radius as the first dynamic pressure generation groove 13 from the starting end 14a toward the outer diameter side, and generates a dynamic pressure at the terminating end 14b when the rotating seal ring 20 rotates forward. Furthermore, the first and second dynamic pressure generation grooves 13 and 14 are not limited to extending in an arc shape inclined in the forward rotation direction of the rotating seal ring 20, but may, for example, extend in a straight line inclined in the forward rotation direction of the rotating seal ring 20 (the forward rotation direction of relative rotation).

As illustrated in FIG. 3, the terminating end 13b of the first dynamic pressure generation groove 13 is located on the leakage side in relation to the terminating end 14b of the second dynamic pressure generation groove 14. In other words, the second dynamic pressure generation groove 14 is formed to have an extension portion 14c that extends further toward the sealed fluid side in the radial direction than the first dynamic pressure generation groove 13.

An annular groove 16 which is a minute recess is formed on the sealed fluid side in relation to the terminating end 14b of the second dynamic pressure generation groove 14. A region provided with these annular grooves 16 is referred to as a dynamic pressure generating region 15. Specifically, in this embodiment, the dynamic pressure generating region 15 is constituted by the plurality of annular grooves 16 formed in parallel to each other at predetermined intervals in the radial direction of the sliding surface 11.

The annular groove 16 does not communicate with the leakage side space S1 and the sealed fluid side space S2 and also does not communicate with the first and second dynamic pressure generation grooves 13 and 14. The annular groove 16 forms an annular shape along the relative rotation direction with the sliding surface 21 of the facing rotating seal ring 20.

Further, each of the annular grooves 16 is formed such that the depth is equal to or smaller than those of the first and second dynamic pressure generation grooves 13 and 14. Further, each of the annular grooves 16 is formed such that a narrower radial width in the circumferential width and the radial width is narrower than the narrower circumferential widths of the first and second dynamic pressure generation grooves 13 and 14 in the widths of the first and second dynamic pressure generation grooves 13 and 14. Then, each of the annular grooves 16 is formed such that the volume is smaller than those of the first and second dynamic pressure generation grooves 13 and 14. Preferably, the depth is half or less, the width is one-fifth or less, and the volume is one-tenth or less.

Further, the sliding surface 11 includes lands 17, 18, 19, and 23 which are flat on the same plane. The land 17 is a portion between the first and second dynamic pressure generation grooves 13 and 14 in the circumferential direction. The land 18 is a portion between the annular grooves 16 in the radial direction. The land 19 is a portion between the extension portions 14c of the second dynamic pressure generation grooves 14 adjacent to each other in the circumferential direction. The land 23 is a portion on the sealed fluid side in relation to the annular groove 16.

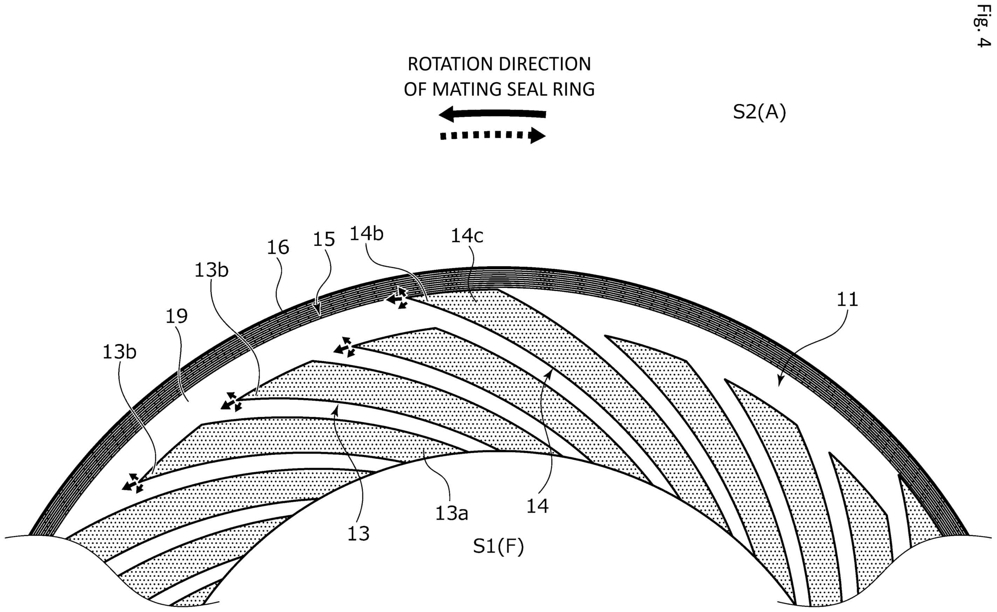

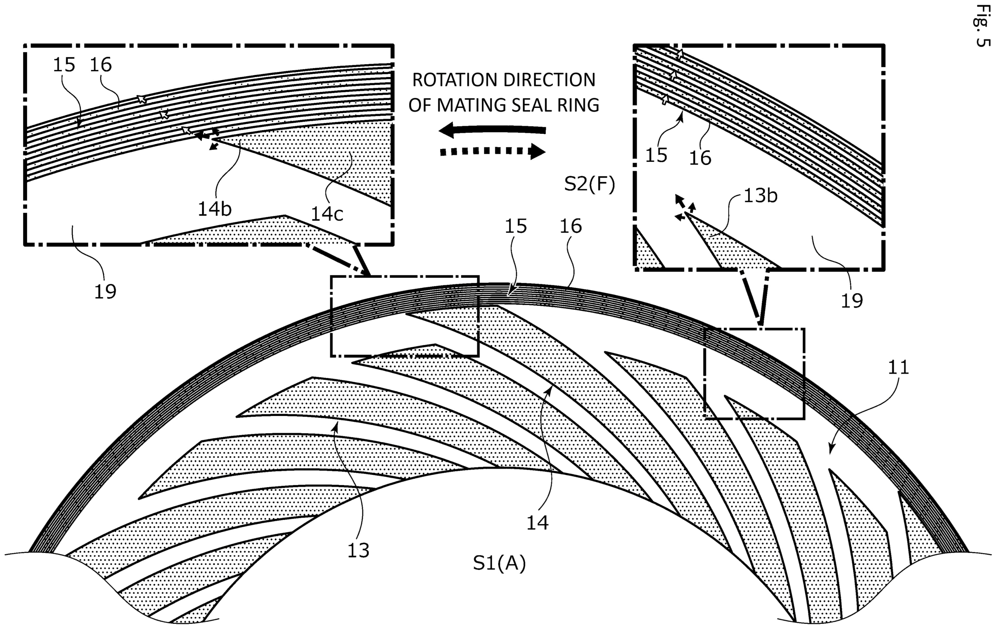

Next, the operation of the stationary seal ring 10 and the rotating seal ring 20 during relative rotation will be described with reference to FIGS. 4 and 5. Furthermore, in this embodiment, the operation of the rotating seal ring 20 in a stop state, a low-speed rotation state, and a high-speed rotation state will be described in order.

First, in the stop state in which the rotating seal ring 20 does not rotate, the gas of the leakage side space S1 flows from the starting end 13a into the first dynamic pressure generation groove 13. Further, similarly, the gas of the leakage side space S1 flows from the starting end 14a into the second dynamic pressure generation groove 14. The stationary seal ring 10 is biased toward the rotating seal ring 20 by the elastic member 7. The sliding surfaces 11 and 21 are in contact with each other. The land 23 which is secured in an annular shape on the sealed fluid side of the annular groove 16 prevents the sealed fluid F of the sealed fluid side space S2 from leaking into the leakage side space S1. Further, since the annular groove 16 does not have a large radial component, the plurality of annular grooves 16 formed in a line in the radial direction can function as a labyrinth seal and improve the sealing performance in the stop state.

Next, a high-speed rotation in which the rotating seal ring 20 rotates at high speed in the forward direction relative to the stationary seal ring 10, such as in a steady operation state, will be described. As illustrated in FIG. 4, in the high-speed rotation state, the gas in the first dynamic pressure generation groove 13 is moved in the rotation direction of the rotating seal ring 20 due to shear with the sliding surface 21 to move toward the terminating end 13b. Further, similarly, the gas in the second dynamic pressure generation groove 14 is moved in the rotation direction of the rotating seal ring 20 due to shear with the sliding surface 21 to move toward the terminating end 14b.

Accordingly, a dynamic pressure is generated at the terminating end 13b of the first dynamic pressure generation groove 13 and its vicinity and the terminating end 14b of the second dynamic pressure generation groove 14 and its vicinity. This dynamic pressure separates the sliding surfaces 11 and 21, and a fluid film is formed between the sliding surfaces 11 and 21 by the gas, which is the fluid on the leakage side, thereby achieving the effect of reducing friction. Furthermore, since a dynamic pressure is generated at the terminating end 13b and the terminating end 14b and a negative pressure is generated proportionally at the starting end 13a and the starting end 14a, a gas is sucked from the starting end 13a and the starting end 14a into the first dynamic pressure generation groove 13 and the second dynamic pressure generation groove 14.

Further, the foreign matter and the sealed fluid F between the sliding surfaces 11 and 21 can be effectively discharged to the outside of the gap between the sliding surfaces 11 and 21 by the dynamic pressure generated at the terminating end 13b of the first dynamic pressure generation groove 13 and its vicinity and the terminating end 14b of the second dynamic pressure generation groove 14 and its vicinity.

Specifically, a dynamic pressure is generated at the terminating ends 13b of the first dynamic pressure generation grooves 13 which are arranged in larger numbers than the second dynamic pressure generation grooves 14. In addition, a dynamic pressure is generated at the terminating end 14b of the second dynamic pressure generation groove 14 which extends to the sealed fluid side in relation to the first dynamic pressure generation groove 13. Due to these dynamic pressures, a change in radial pressure gradient occurs. Particularly, since the terminating end 14b of the second dynamic pressure generation groove 14 is located in the vicinity of the sealed fluid side, the foreign matter and the sealed fluid F can be effectively and easily discharged to the outside of the gap between the sliding surfaces 11 and 21, that is, into the sealed fluid side space S2. In addition, the annular groove 16 is present on the sealed fluid side in relation to the second dynamic pressure generation groove 14, and the land 19 is present between the extension portions 14c protruding toward the sealed fluid side of the adjacent second dynamic pressure generation grooves 14 in the circumferential direction. Since the land 19 can improve the dynamic pressure effect of the first dynamic pressure generation groove 13 and the annular groove 16 can assist the dynamic pressure effect of the second dynamic pressure generation groove 14, it is possible to improve the discharge performance for liquid, foreign matter, and the like even during low-speed rotation.

Furthermore, since the second dynamic pressure generation grooves 14 are arranged in small numbers than the first dynamic pressure generation grooves 13, the lands on the sealed fluid side in relation to the terminating ends 13b and 14b of the first and second dynamic pressure generation grooves 13 and 14 are sufficiently secured, and the effect of preventing the leakage of the sealed fluid F can be maintained.

Next, the low-speed rotation state immediately after the rotating seal ring 20 starts to rotate relative to the stationary seal ring 10 in the forward rotation direction will be described. As illustrated in FIG. 5, even in the low-speed rotation state, the gas in the first dynamic pressure generation groove 13 and the second dynamic pressure generation groove 14 is moved in the rotation direction of the rotating seal ring 20 due to shear with the sliding surface 21. The gas in the first dynamic pressure generation groove 13 and the second dynamic pressure generation groove 14 moves toward the terminating end 13b or the terminating end 14b. Accordingly, the pressure is increased at each of the terminating end 13b and the terminating end 14b, and a dynamic pressure is generated at the terminating end 13b, the terminating end 14b, and its vicinity. On the other hand, the dynamic pressure effect during low-speed rotation state is lower than that in the high-speed rotation state.

Similarly, since the gas in the annular groove 16 is moved in the rotation direction of the rotating seal ring 20 due to shear with the sliding surface 21 to be moved in the circumferential direction, the inner pressure is increased and a dynamic pressure is generated toward the outside of the annular groove 16. Due to this dynamic pressure, the sliding surface 21 of the facing rotating seal ring 20 is pushed out.

Further, as illustrated in FIG. 5, this annular groove 16 acts as resistance to the fluid flowing out from the first dynamic pressure generation groove 13 to the leakage side. Accordingly, a dynamic pressure is generated as indicated by the white arrow, and the dynamic pressure generation effect during low-speed rotation can be effectively assisted. Specifically, a part of the fluid flowing out from the first dynamic pressure generation groove 13 flows from the side of the annular groove 16. The radial flow of the fluid flowing out from the first dynamic pressure generation groove 13 can generate a dynamic pressure between the sliding surfaces 11 and 21 from the side of the annular groove 16 on the sealed fluid side. That is, even when a small amount of fluid flows from the first dynamic pressure generation groove 13 and the second dynamic pressure generation groove 14 toward the outer diameter side and crosses the annular groove 16, a dynamic pressure is generated.

Since the annular groove 16 is formed to have a smaller volume than those of the first and second dynamic pressure generation grooves 13 and 14, a supplementary dynamic pressure can be generated to slightly separate the sliding surfaces 11 and 21 from each other even when the rotating seal ring 20 rotates at a low speed. In other words, the annular groove 16 generates a supplementary dynamic pressure to the first dynamic pressure generation groove 13 and the second dynamic pressure generation groove 14.

The dynamic pressure generating region 15 constituted by the plurality of annular grooves 16 is located on the sealed fluid side in relation to the terminating end 14b of the second dynamic pressure generation groove 14. For this reason, the sliding surfaces 11 and 21 can be separated from each other due to the dynamic pressure generated on the sealed fluid side of the gap between the sliding surfaces 11 and 21, and the foreign matter can be effectively and easily discharged to the outside of the gap between the sliding surfaces 11 and 21, that is, the sealed fluid side space S2. Further, since the annular groove 16 is formed only at the minimum necessary locations on the sliding surface 11, a land on the sliding surface 11 can be secured and an effect on sealing performance during high-speed rotation can be prevented.

In this way, since the foreign matter that causes resistance to rotation can be quickly discharged at an early stage before the rotation speed reaches high speed, the sliding surfaces 11 and 21 can rotate satisfactorily relative to each other. Further, since the interface between the leakage side fluid and the sealed fluid F is pushed out toward the sealed fluid side beyond the terminating end 14b of the second dynamic pressure generation groove 14 during low-speed rotation, the foreign matter discharge effect can be improved and the leakage of the sealed fluid F can be suppressed.

The second dynamic pressure generation groove 14 extends radially longer than the first dynamic pressure generation groove 13. For this reason, particularly in the low-speed rotation state, the pressure at the terminating end 14b and its vicinity is lower than that of the first dynamic pressure generation groove 13, that is, the dynamic pressure generation effect tends to be insufficient. The annular groove 16 is located on the sealed fluid side in relation to the terminating end 13b of the first dynamic pressure generation groove 13 and generates a dynamic pressure at that position. That is, a dynamic pressure is generated at the annular groove 16 in addition to the dynamic pressure generated at the terminating end 13b of the first dynamic pressure generation groove 13, and a high foreign matter discharge effect can be achieved. In other words, the annular groove 16 can supplement the dynamic pressure generation effect during low-speed rotation.

Further, the dynamic pressure generated in the annular groove 16 can assist in the formation of the fluid film during low-speed rotation. Accordingly, since it is possible to maintain and supplement the formation of the fluid film from the beginning of low-speed rotation, wear between the sliding surfaces 11 and 21 can be suppressed. Further, sliding performance during subsequent low-speed rotation can be improved by quickly discharging the foreign matter that causes resistance to rotation at an early stage.

Further, since the annular groove 16 is formed along the rotation direction of the facing sliding surface 21 and has no large radial component, the sealing performance in the stop state can be improved.

Further, since the annular groove 16 extends continuously in the circumferential direction, it is possible to suppress the entry of the sealed fluid F into the leakage side space S1 over the entire circumferential direction in the stop state.

### {Second embodiment}

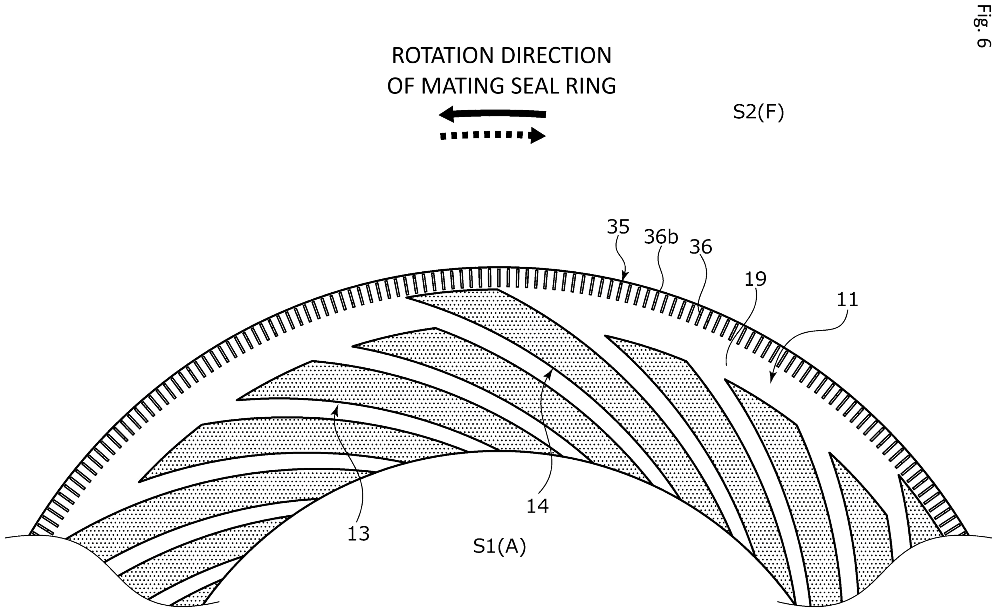

Next, a sliding component according to a second embodiment of the present invention will be described with reference to FIG. 6. Furthermore, the description of the configurations which are the same as and overlap with those of the first embodiment will be omitted.

A dynamic pressure generating region 35 of this embodiment is constituted by a plurality of radial grooves 36 which are minute recesses extending in the radial direction on the sliding surface 11. The radial grooves 36 generate a dynamic pressure at the terminating end 36b when the rotating seal ring 20 rotates forward. The radial grooves 36 generate a flow of a radial component, which can further improve the foreign matter discharge performance. Further, since the radial grooves 36 are substantially orthogonal to the relative rotation direction, a dynamic pressure is easily generated during extremely slow relative rotation.

It is preferable that the radial grooves 36 do not communicate with the sealed fluid side space S2 as in this embodiment, but they may communicate with the space S2.

### {Third embodiment}

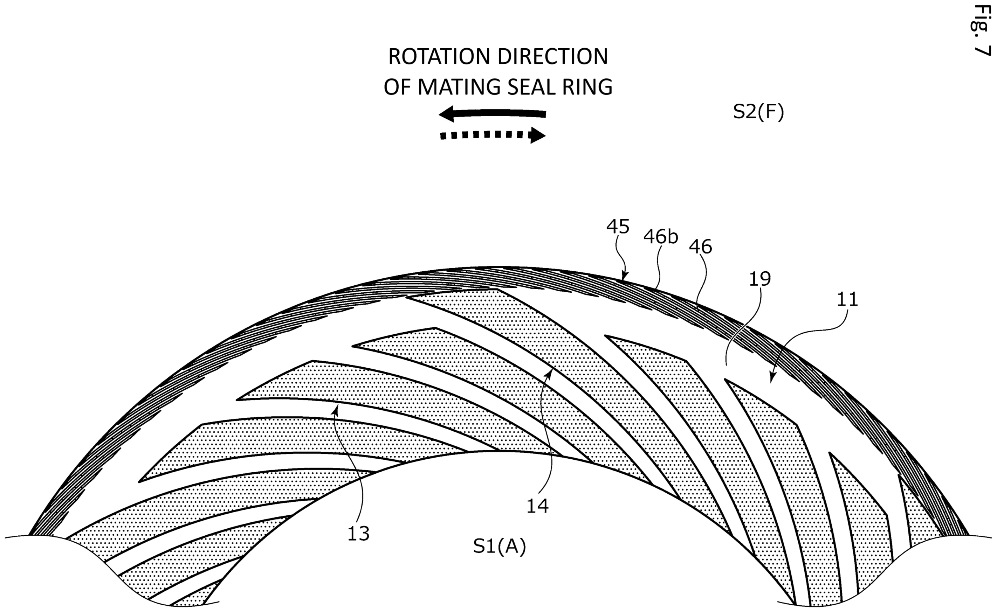

Next, a sliding component according to a third embodiment of the present invention will be described with reference to FIG. 7. Furthermore, the description of the configurations which are the same as and overlap with those of the first embodiment will be omitted.

A dynamic pressure generating region 45 of this embodiment is constituted by a plurality of spiral grooves 46 which are minute recesses extending in an arc shape inclined in the forward rotation direction of the rotating seal ring 20 in the sliding surface 11. The spiral groove 46 generates a dynamic pressure at a terminating end 46b when the rotating seal ring 20 rotates forward. In the spiral groove 46, a flow of a radial component and a flow of a circumferential component are generated, and the foreign matter discharge performance can be further improved. Further, since the spiral groove 46 extends to intersect with the relative rotation direction, a relative high dynamic pressure is easily generated during extremely slow relative rotation.

### {Fourth embodiment}

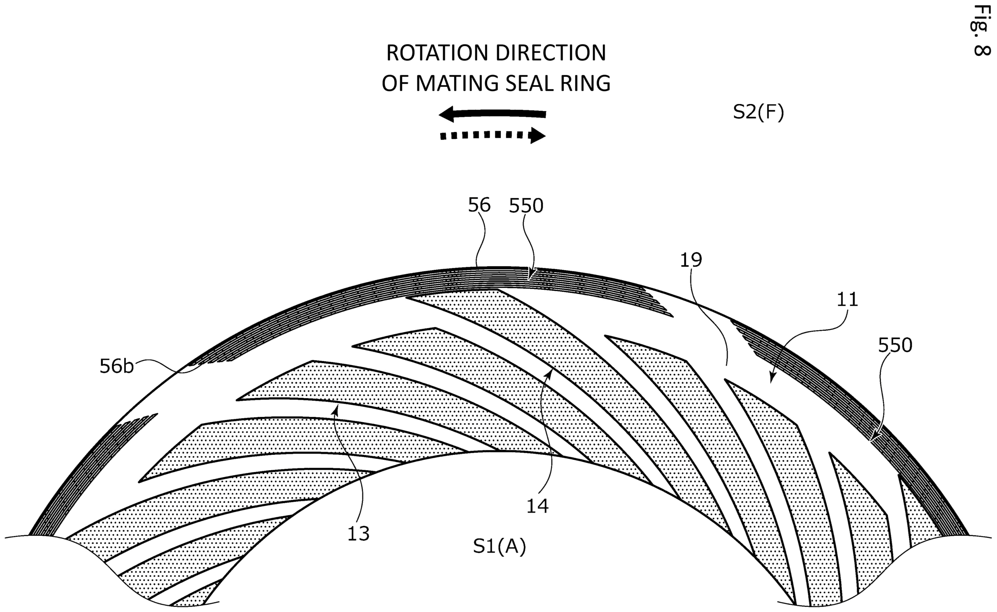

Next, a sliding component according to a fourth embodiment of the present invention will be described with reference to FIG. 8. Furthermore, the description of the configurations which are the same as and overlap with those of the first embodiment will be omitted.

As illustrated in FIG. 8, the sliding surface 11 is provided with a plurality of minute recess groups 550 in the circumferential direction, and each group is constituted by a plurality of arc grooves 56 as minute recesses arranged in the radial direction. The arc groove 56 is formed in an arc shape along the relative rotation direction with the sliding surface 21 of the facing rotating seal ring 20. The minute recess groups 550 adjacent to each other in the circumferential direction are separated from each other at predetermined intervals. Each of the minute recess groups 550 constitutes a dynamic pressure generating region. Accordingly, a dynamic pressure can be effectively generated in each of terminating ends 56b of the arc grooves 56 constituting the minute recess group 550 and its vicinity due to the rotation of the facing rotating seal ring 20, and the foreign matter discharge performance and the dynamic pressure generation effect can be improved. In addition, the leakage of the sealed fluid can be suppressed by the arc groove 56 along the rotation direction of the rotating seal ring 20.

### {Fifth embodiment}

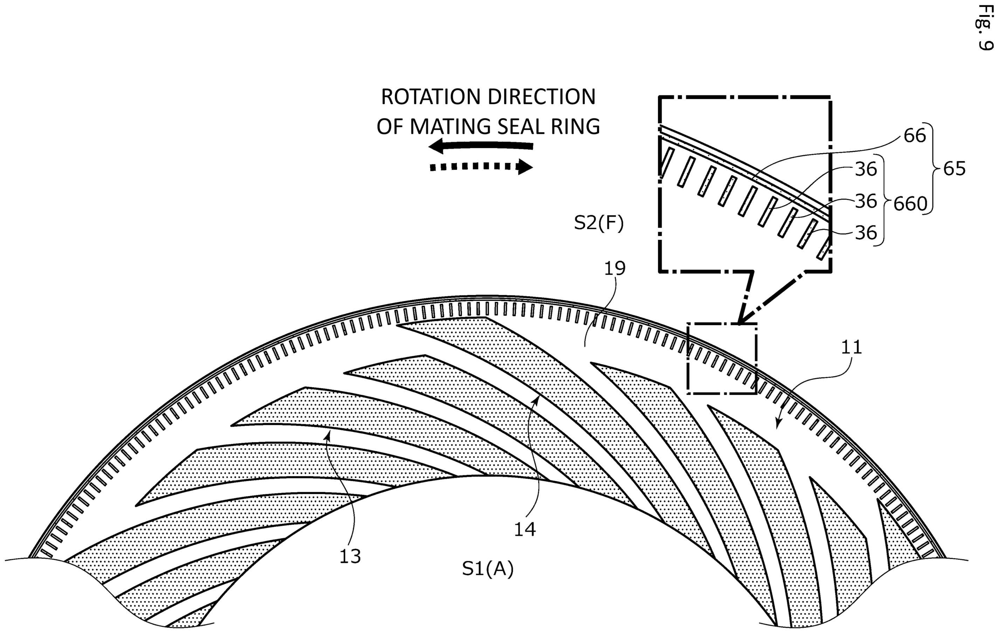

Next, a sliding component according to a fifth embodiment of the present invention will be described with reference to FIG. 9. Furthermore, the description of the configurations which are the same as and overlap with those of the first embodiment will be omitted.

As illustrated in FIG. 9, the sliding surface 11 is provided with a dynamic pressure generating region 65 which is constituted by an annular minute recess group 660 and an annular groove 66. The minute recess group 660 is constituted by a plurality of radial grooves 36 which extend in the radial direction. The radial grooves 36 are minute recesses and are formed in a plurality in the circumferential direction. The annular groove 66 is a minute recess disposed on the sealed fluid side in relation to the minute recess group 660. Accordingly, the annular groove 66 improves the sealing performance in the stop state in addition to the improvement of the foreign matter discharge performance due to the flow of the radial component generated in the radial groove 36.

### {Sixth embodiment}

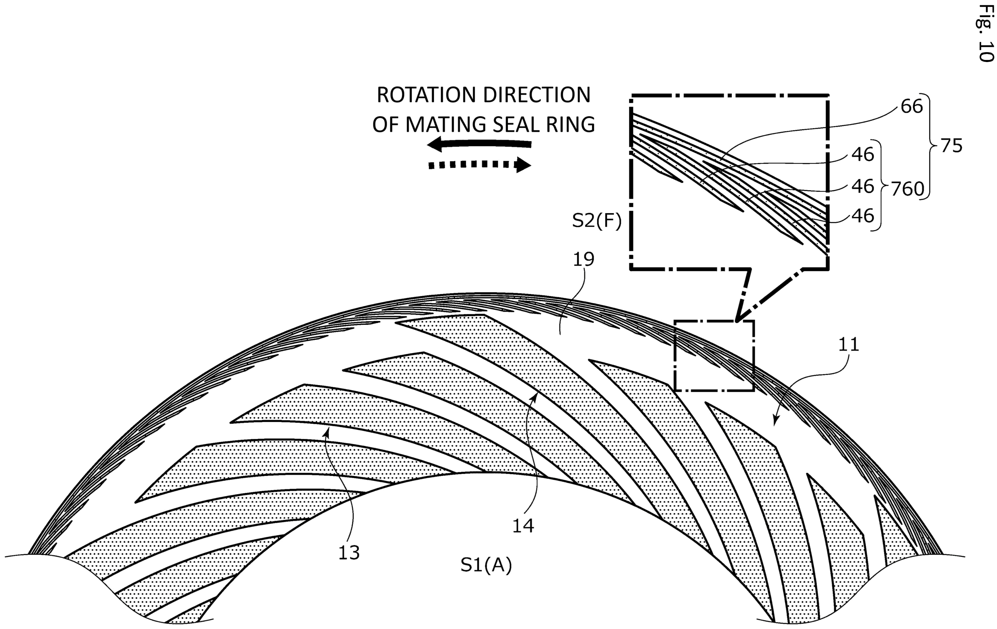

Next, a sliding component according to a sixth embodiment of the present invention will be described with reference to FIG. 10. Furthermore, the description of the configurations which are the same as and overlap with those of the first embodiment will be omitted.

As illustrated in FIG. 10, the sliding surface 11 is provided with a dynamic pressure generating region 75 which is constituted by an annular minute recess group 760 and the annular groove 66. The minute recess group 760 is constituted by the plurality of spiral grooves 46 extending in an arc shape to be inclined in the forward rotation direction of the rotating seal ring 20. The spiral grooves 46 are minute recesses and are formed in a plurality in the circumferential direction. The annular groove 66 is a minute recess disposed on the sealed fluid side in relation to the minute recess group 760. Accordingly, the annular groove 66 improves the sealing performance in the stop state in addition to the improvement of the foreign matter discharge performance due to the flows of the circumferential component and the radial component generated in the spiral groove 46.

Although the embodiments of the present invention have been described above with reference to the drawings, the specific configuration is not limited to these embodiments, and the present invention also includes modifications and additions that do not deviate from the scope of the present invention.

For example, in the first to sixth embodiments, although the mechanical seal for automobiles has been described as an example of the sliding component, other mechanical seals for general industrial machines and the like may also be used. Further, the present invention is not limited to the mechanical seal, and may be applied to sliding components other than mechanical seals, such as sliding bearings.

Further, in the first to sixth embodiments, although an example has been described in which the dynamic pressure generation grooves and the minute recesses are provided in the stationary seal ring, the dynamic pressure generation grooves and the minute recesses may be provided in the rotating seal ring or the minute recesses may be provided on both surfaces of the stationary seal ring and the rotating seal ring.

Further, in the first to sixth embodiments, although it has been described that the sealed fluid side is the high pressure side and the leakage side is the low pressure side, the sealed fluid side may be the low pressure side and the leakage side may be the high pressure side, and the sealed fluid side and the leakage side may have substantially the same pressure.

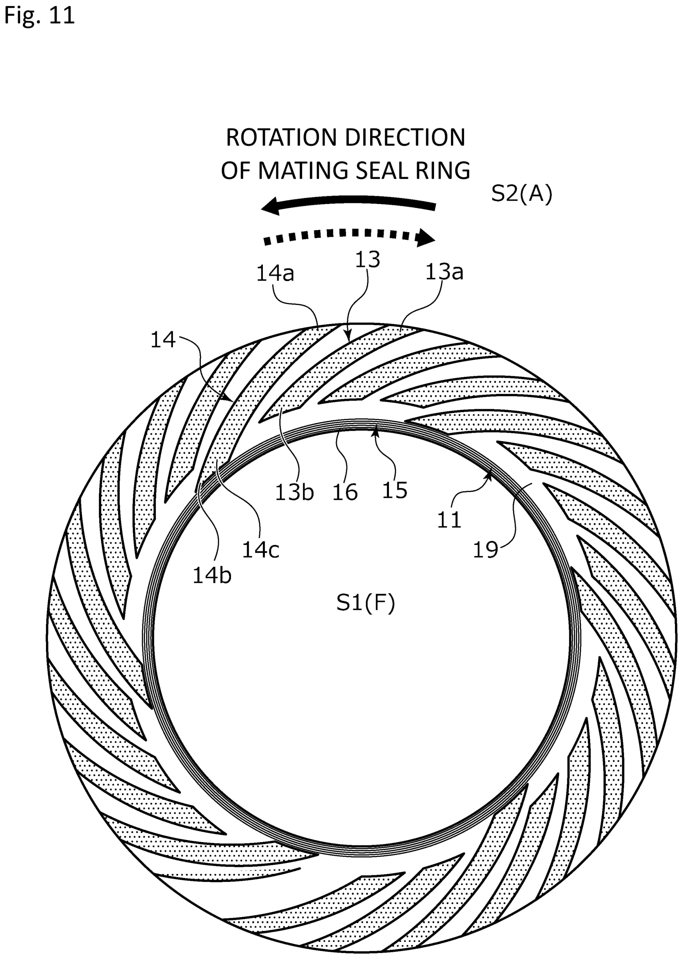

Further, the mechanical seal having the sliding components of the first to sixth embodiments has been described as an inside type, but may be applied to an outside type that seals the fluid leaking from the inner diameter side toward the outer diameter side of the sliding surface. For example, a modified example of the first embodiment which is an outside type is illustrated in FIG. 11.

Further, in the first to sixth embodiments, although it has been described that the dynamic pressure generation groove communicates with the leakage space, the present invention is not limited thereto, and they may not communicate with each other if a dynamic pressure can be generated.

Further, in the first to sixth embodiments, although it has been described that the plurality of second dynamic pressure generation grooves 14 are provided in the circumferential direction, at least one of them may be provided.

Further, in the first to sixth embodiments, although it has been described that each of the minute recesses has a groove shape, the present invention is not limited to the groove shape, but for example, a dimple or the like may be used. Furthermore, in the case of the dimple, a part of the dimple may be open in a crescent shape at the edge on the sealed fluid side.

Further, the minute recesses constituting the dynamic pressure generating region refer to recesses having a depth of half or less, a width of one-fifth or less, and a volume of one-tenth or less with respect to the first and second dynamic pressure generation grooves 13 and 14, and the shape is not limited within these ranges.

### {REFERENCE SIGNS LIST}

- 10: Stationary seal ring
- 11, 21: Sliding surface
- 13: Dynamic pressure generation groove (first dynamic pressure generation groove)
- 14: Dynamic pressure generation groove (second dynamic pressure generation groove)
- 14c: Extension portion
- 15: Dynamic pressure generating region
- 16: Annular groove (minute recess)
- 20: Rotating seal ring
- 35: Dynamic pressure generating region
- 36: Radial groove (minute recess)
- 45: Dynamic pressure generating region
- 46: Spiral groove (minute recess)
- 55: Dynamic pressure generating region
- 56: Arc groove (minute recess)
- 65: Dynamic pressure generating region
- 66: Annular groove (minute recess)
- 75: Dynamic pressure generating region
- S1: Leakage side space
- S2: Sealed fluid side space

## Claims

1. A sliding component comprising a pair of sliding rings having sliding surfaces which rotate relative to each other to partition a sealed fluid side space and a leakage side space,
wherein at least one of the sliding surfaces is provided with first dynamic pressure generation grooves each of which communicates with the leakage side space and second dynamic pressure generation grooves each of which has a terminating end position on a sealed fluid side, the terminating end portion being located on the sealed fluid side in relation to a terminating end position of the first dynamic pressure generation groove on the sealed fluid side,
wherein each of the second dynamic pressure generation grooves has an extension portion that protrudes toward the sealed fluid side in relation to the terminating end portion of the first dynamic pressure generation groove,
wherein a land is formed between the extension portions of the second dynamic pressure generation grooves adjacent to each other in a circumferential direction, and
wherein a dynamic pressure generating region which is constituted by a plurality of minute recesses not communicating with the sealed fluid side space and the leakage side space is formed on the sealed fluid side in relation to the terminating ends of the second dynamic pressure generation grooves adjacent to each other in the circumferential direction.

2. The sliding component according to claim 1,
wherein each of the minute recesses has a circumferential width and a radial width, and narrower one of the circumferential width and the radial width is narrower than circumferential widths of the first dynamic pressure generation groove and the second dynamic pressure generation groove.

3. The sliding component according to claim 1,
wherein at least a part of the minute recesses is formed to lengthen in a relative rotation direction of the sliding surfaces.

4. The sliding component according to claim 1,
wherein at least a part of the minute recesses has a circumferential component and a radial component larger than the circumferential component.

5. The sliding component according to claim 1,
wherein the minute recess closest to the sealed fluid side in the dynamic pressure generating region has an annular shape.

6. The sliding component according to any one of claims 1 to 4,
wherein the minute recesses constituting the dynamic pressure generating region are equal, in groove pattern, to each other.
